# EUROPÄISCHE PATENTSCHRIFT

(11) **EP 1 212 813 B1**
(45) Veröffentlichungstag und Bekanntmachung des Hinweises auf die Patenterteilung: **17.12.2003**
(21) Anmeldenummer: 00964174.7
(22) Anmeldetag: 15.09.2000
(51) Int. Cl.: H01R 12/24

(54) **KABELVERBINDUNG ZWISCHEN FLACHBANDKABEL UND RUNDBANDKABEL BZW. RUNDKABEL UND VERFAHREN ZU DEREN HERSTELLUNG**
CABLE CONNECTION BETWEEN FLAT RIBBON CABLE AND ROUND RIBBON CABLE OR ROUND CABLE AND METHOD FOR PRODUCING THE SAME
RACCORDEMENT ENTRE UN CABLE A CONDUCTEURS PLATS EN BANDE ET UN CABLE ROND OU UN CABLE A CONDUCTEURS RONDS EN BANDE ET SON PROCEDE DE PRODUCTION

(30) Priorität: 16.09.1999 DE 19944427
(43) Veröffentlichungstag der Anmeldung: 12.06.2002
(73) Patentinhaber: TYCO Electronics Logistics AG, 9323 Steinach (CH)
(72) Erfinder: WENDEL, Lothar, 64409 Messel (DE)
(74) Vertreter: Gallo, Wolfgang, Dipl.-Ing. (FH)
(86) Internationale Anmeldenummer: EP0009005
(87) Internationale Veröffentlichungsnummer: WO01020726

(56) Entgegenhaltungen:
- EP-A- 0 411 613
- EP-A- 0 746 056
- DE-C- 19 647 925
- US-A- 5 824 955
- PATENT ABSTRACTS OF JAPAN vol. 017, no. 057 (E-1315), 4. Februar 1993 (1993-02-04) & JP 04 267087 A (TOKAI RIKA CO LTD;OTHERS: 01), 22. September 1992 (1992-09-22)

## Beschreibung

Umfangreiche elektrische und elektronische Ausrüstungen, beispielsweise in Kraftfahrzeugen, erfordern entsprechend umfangreiche Verkabelungen. Früher bei weniger umfangreicher Elektronik wurden dazu aus zusammengebundenen Kabeln und Aderleitungen aufgebaute Kabelbäume verlegt. Heute werden vielfach Flachbandkabel verwendet, die eine platzsparende und übersichtliche Verlegung ermöglichen und eine Vielzahl von als Flachbandleitern ausgeführten Einzelleitern umfassen, die auch in Gruppen mit unterschiedlichen Querschnitten für unterschiedliche Ströme ausgeführt sein können. Der Anschuß der einzelnen Verbraucher-, Signalgeber- oder Steuerorgane erfolgt über je nach Anzahl und Art der notwendigen Leitungsadern als Rundkabel oder Rundbandkabel ausgeführte Anschlußleitungen, die an Abzweigstellen oder an Endverbindungsstellen mit entsprechenden Flachbandleitern des Flachbandkabels verbunden sind.

Die Erfindung bezweckt, eine Kabelverbindung zwischen einem Flachbandkabel und einem Rundkabel bzw. Rundbandkabel zu schaffen, die als Abzweigverbindung oder als Endverbindung eingesetzt werden kann und die es ermöglicht, je nach Bedarf ein oder mehrere Rundkabel oder Rundbandkabel oder Mischanordnungen hiervon mit dem Flachbandkabel zu verbinden.

Eine Kabelverbindung zwischen einem mehrpoligen Flachbandkabel und einer mehrpoligen Rundleiteranordnung mit den Merkmalen des Oberbegriffs des Patentanspruchs 1 ist bereits aus der DE 196 47 925 C1 bekannt. Dort hat die im Anspruch 1 erwähnte Kunststoffträgerplatte die Gestalt eines Gehäuseunterteils, das am rundleiterseitigen Endbereich und am flachleiterseitigen Endbereich jeweils Kammern zum Einlegen eines Rundleiterendes bzw. eines Flachleiterendes aufweist. Dazwischen verlaufen auf eine Plattenfläche des Gehäuseunterteils aufgelegte Flachleiter, die jeweils mit dem zugehörigen Rundleiterende und mit dem zugehörigen Flachbandleiterende stoffschlüssig verbunden sind. Ein formschlüssig aufgeklippster Gehäusedeckel kapselt die Anordnung und fixiert sogleich die Flachleiter sowie die Enden der Rundleiteranordnung und des Flachbandkabels in dem Gehäuse.

Aufgabe der Erfindung es es demgegenüber, eine solche Kabelverbindung im Hinblick auf eine wirtschaftliche und kostengünstige Herstellung, aber trotzdem mit absolut einwandfreier Betriebssicherheit auch im Langzeitbetrieb auszubilden sowie auch im Hinblick auf einen möglichst geringen Platzbedarf.

Diese Aufgabe wird durch die im Patentanspruch 1 angegebene Kabelverbindung gelöst. Vorteilhafte Ausgestaltungen der Erfindung sind Gegenstand der auf den Anspruch 1 rückbezogenen Unteransprüche.

Die der Erfindung zugrunde liegende Aufgabe wird weiter durch das in den Verfahrenspatentansprüchen angegebene Verfahren zur Herstellung dieser Kabelverbindung gelöst.

Die erfindungsgemäße Kabelverbindung ist also in Sandwichbauweise ausgeführt. Sie kann mehrere Etagen haben. Auf diese Weise sind Rundbandkabel und Rundkabel mit unterschiedlichen Rastern und Querschnitten und in unterschiedlichen Ebenen mit Flachbandleitern eines Flachbandkabels sowohl in Form eines Kabelabzweigs als auch in Form einer Kabelendverbindung verbindbar, und die Kabelverbindung hat eine gegenüber dem Platzbedarf herkömmlicher vergleichbarer Kabelverbindungsanordnungen deutlich reduzierte Baubreite. Die ganze Kabelverbindung ist in einer flachen Kunststoffumspritzung gekapselt und damit mechanisch stabil. Alle Leiterverbindungen sind sowohl gegen mechanische Einflüsse wie auch gegen Umgebungseinflüsse geschützt.

Die Herstellung ist maschinell und voll automatisiert auf einfache und kostengünstige Weise möglich, was sich gerade für die in der Automobilindustrie notwendige Massenfertigung besonders eignet und darüber hinaus einen herkömmlichen Methoden deutlich übertreff enden Qualitätsstandard ermöglicht.

Die Erfindung wird nachstehend unter Bezug auf die anliegenden Zeichnungen mehr im einzelnen erläutert, wobei aus dieser Erläuterung auch die Vorteile und Besonderheiten der erfindungsgemäßen Kabelverbindung deutlich werden. In den Zeichnungen zeigt:
- Fig. 1: eine auseinandergezogene Darstellung der Kabel und der inneren Elemente einer Ausführungsform der erfindungsgemäßen Kabelverbindung zwischen einem Flachbandkabel, zwei Rundkabeln und einem Rundbandkabel,
- Fig. 2: die fertiggestellte, aber noch nicht umspritzte Kabelverbindung nach Fig. 1 von oben,
- Fig. 3: die Kabelverbindung nach Fig. 2 von unten,
- Fig. 4: die Kabelverbindung nach den Figuren 2 und 3 von der Seite,

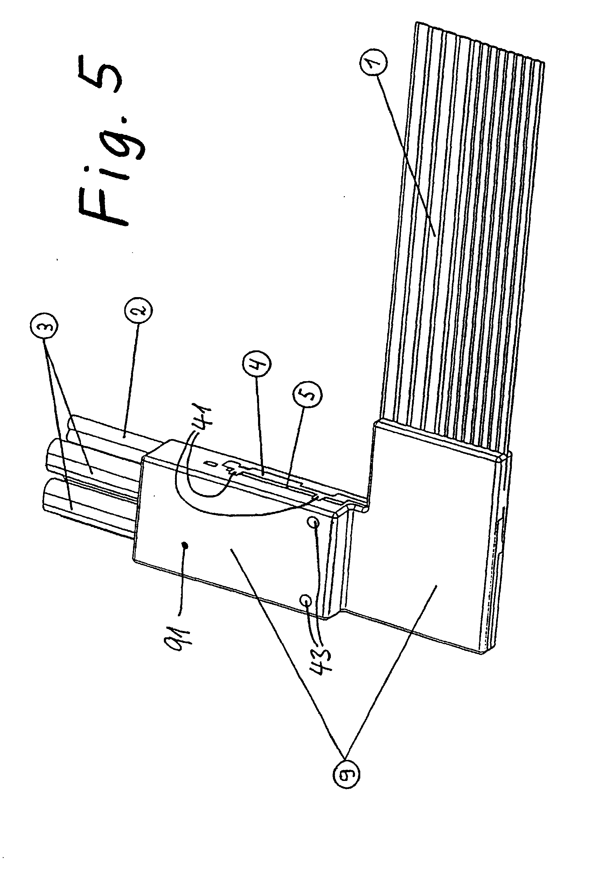

- Fig. 5: die fertiggestellte und umspritzte Kabelverbindung in einer Darstellung ähnlich Fig. 2 von oben,

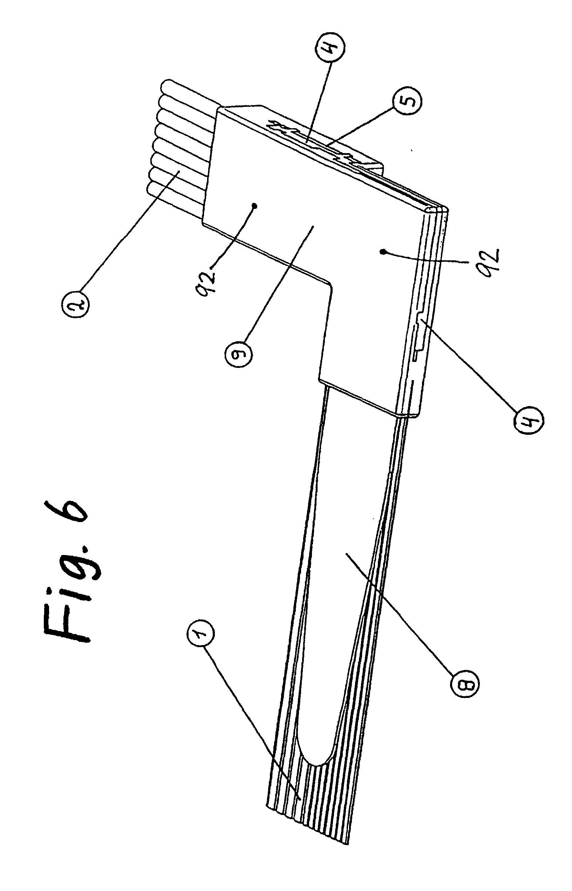

- Fig. 6: die fertiggestellte und umspritzte Kabelverbindung in einer Darstellung ähnlich Fig. 3 von unten, und

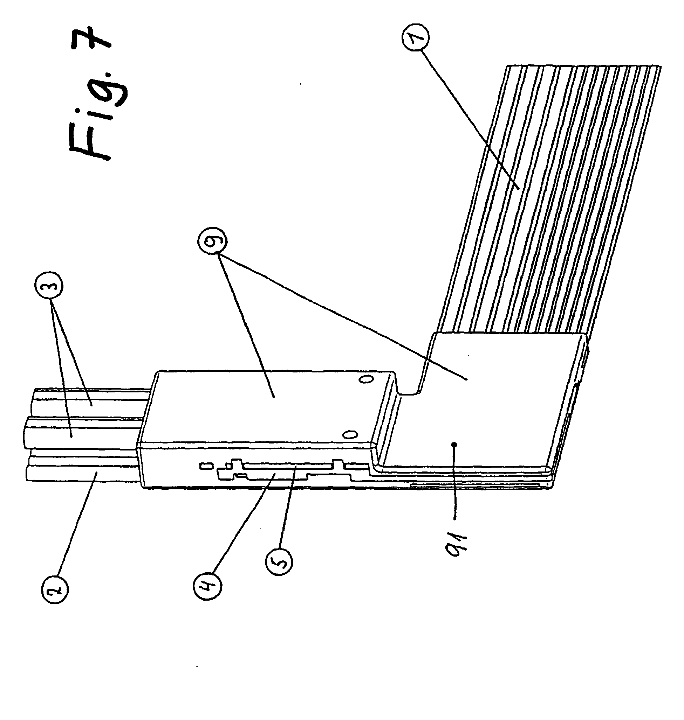

- Fig. 7: die fertiggestellte und umspritzte Kabelverbindung in der Ansicht von links oben.

Die in den Zeichnungen dargestellte Kabelverbindung dient zur Verbindung eines Flachbandkabels 1 mit einem Rundbandkabel 2 und zwei Rundkabeln 3. Das Flachbandkabel 1 ist bei diesem Ausführungsbeispiel zwölfpolig ausgeführt und weist auf einem Trägerfolienband 11 vier Flachbandleiter 12 größeren Querschnitts und acht Flachbandleiter 13 kleineren Querschnitts auf.

Das Rundbandkabel 2 ist achtpolig und besteht aus acht jeweils von einer Kunststoffisolierung 21 umhüllten Leitungsadern 22, die durch seitliches Verschweißen ihrer Isolierungen 21 zu einer bandartigen Parallelanordnung verbunden sind. Die beiden Rundbandkabel 3 sind jeweils zweiadrig ausgebildet und weisen in einer äußeren Rundkabelhülle 31 eingebettet jeweils zwei mit einer jeweils eigenen Isolierung 32 umhüllte Leitungsadern 33 auf.

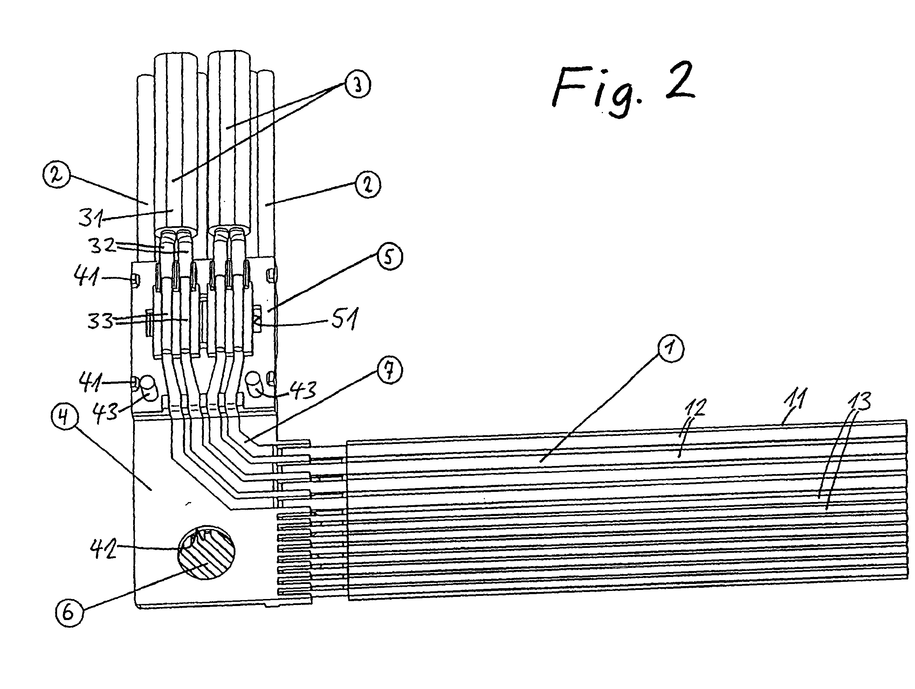

In der Kabelverbindung, siehe die Figuren 2, 3 und 4 sind die beiden Rundkabel 3 und das Rundbandkabel 2 in zwei parallelen Ebenen übereinander angeordnet. Dabei liegt das Rundbandkabel 2 in einer unteren Ebene und die beiden Rundkabel 3 liegen nebeneinander in einer oberen Ebene.

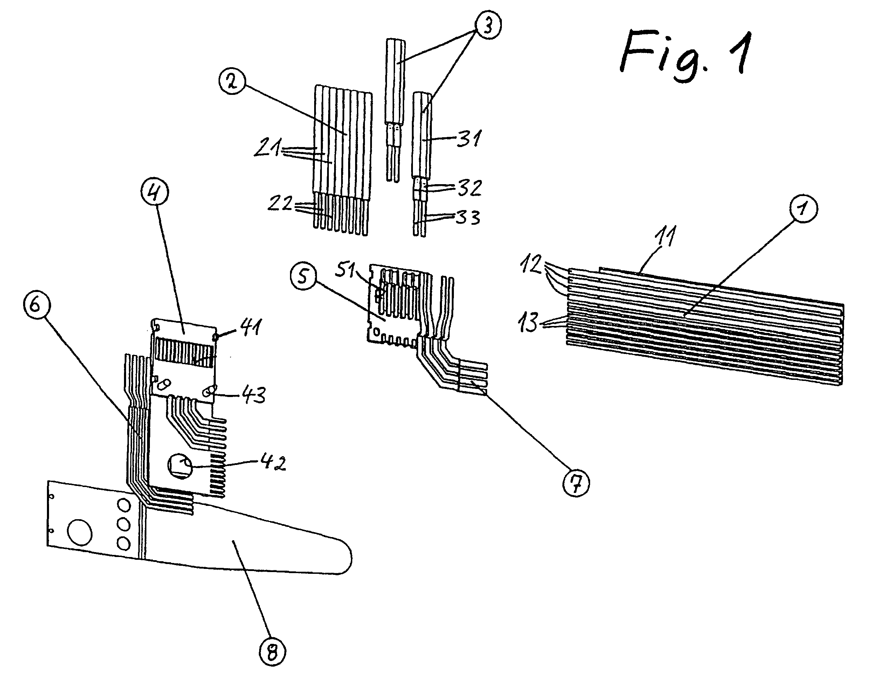

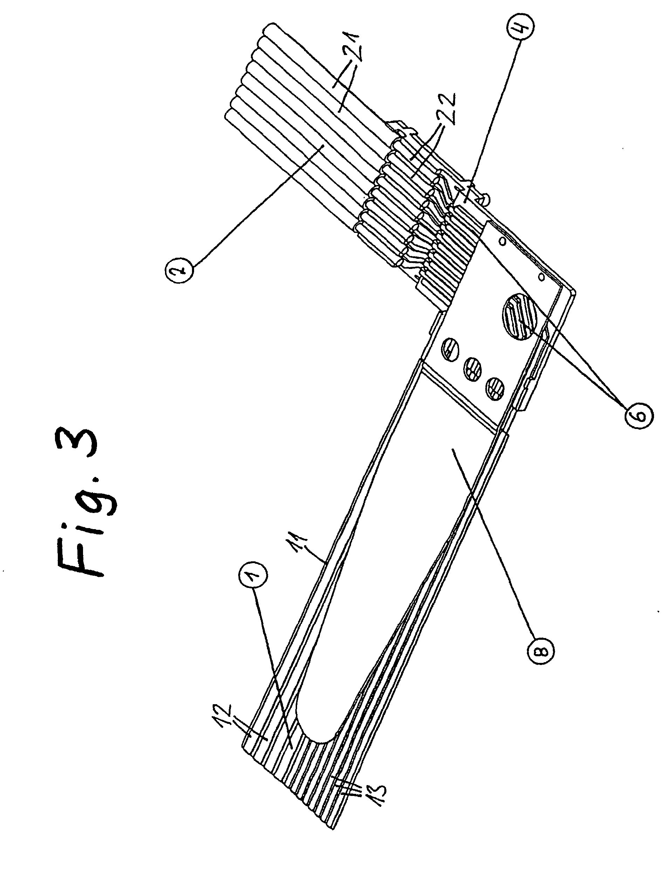

Kernstück der erfindungsgemäßen Kabelverbindung ist mindestens eine Kunststoffträgerplatte als Trägerelement für eine parallele Anordnung von aus Blech gestanzten Flachleitern. Beim vorliegenden Ausführungsbeispiel, wo ein Rundbandkabel 2 und zwei Rundkabel 3 in zwei Ebenen angeordnet sind, sind zwei Kunststoffträgerplatten und zwei Flachleiteranordnungen vorgesehen. Es handelt sich zunächst um eine erste Kunststoffträgerplatte 4. Diese ist an ihrer Unterseite (siehe Fig. 3) mit eingeformten Kanälen zur Aufnahme der acht dem achtpoligen Rundbandkabel 2 zugeordneten Flachleiter 6 und zur Aufnahme der acht blanken Aderenden des Rundbandkabels 2 ausgebildet. Jedes blanke Aderende (siehe Fig. 3) des Rundbandkabels 2 liegt dabei auf der Unterseite des betreffenden Flachleiters 6 an und ist m it diesem ultraschallverschweißt. Wie den Figuren 1 und 3 zu entnehmen ist, fächern sich die acht parallelen Flachleiter 6 zu den Aderenden des Rundbandkabels 2 hin auf und werden breiter, und im übrigen verlaufen sie parallel zueinander und unter Bildung eines 90°-Winkels derart, daß ihre freien Enden in Überdeckung mit den Enden der acht Flachbandleiter 13 des Flachbandkabels 1 liegen (siehe Fig. 2), mit denen sie ebenfalls ultraschallverschweißt sind.

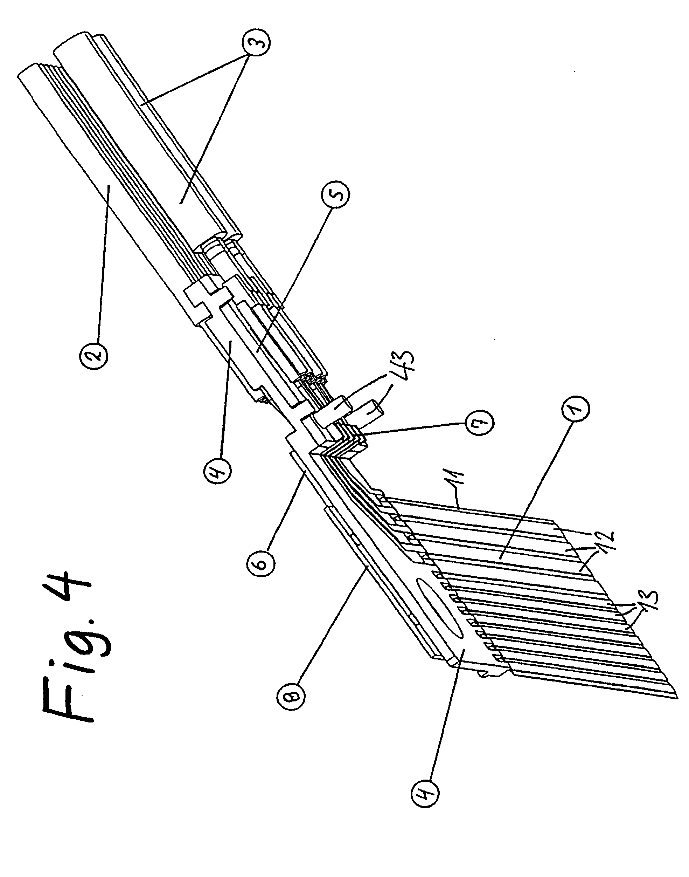

Die zweite Kunststoffträgerplatte 5 dient der Aufnahme der rundkabelseitigen Endbereiche von vier wiederum aus dünnem Blech gestanztem Flachleitern 7, den beiden jeweils zweipoligen Rundkabeln 3 zugeordnet sind. Diese Flachleiter 7 sind wiederum in Führungskanälen eingelegt, die in der Kunststoffträgerplatte 5 eingeformt sind und die auch der Aufnahme und Lagepositionierung der Aderenden der beiden Rundkabel 3 dienen, die widerum mit den Flachleitern 7 ultraschallverschweißt sind. Die Kunststoffträgerplatte 5 ist, wie insbesondere aus den Figuren 2 und 4 ersichtlich ist, auf die Oberseite der Kunststoffträgerplatte 4 in deren rundbandkabelseitigem Bereich aufgesetzt. Zur Fixierung der zweiten Kunststoffträger 5 auf der ersten Kunststoffträgerplatte 4 dienen beim gezeigten Ausführungsbeispiel vier Rastnasen 41, die in entsprechende Aussparungen in den Längskantenbereichen der zweiten Kunststoffträgerplatte 5 eingreifen und über deren Oberseite einrasten.

Die vier Flachleiter 7 verlaufen dann von der zweiten Kunststoffträgerplatte 5 mit einer treppenförmigen Kröpfung nach unten zur ersten Kunststoffträgerplatte 4, wo sie in an deren Oberseite eingeformten Kanälen über zwei jeweils 45°-Abknikkungen um insgesamt 90° abgewinkelt und dann über eine zweite treppenförmige Kröpfung auf das Flachbandkabel 1 verlaufen und sich dort mit den Enden der vier Flachbandleiter 12 überdecken, mit denen sie widerum ultraschallverschweißt sind.

Die beiden Kunststoffträgerplatten 4 und 5 weisen jeweils mindestens einen fensterartigen Durchbruch 42 bzw. 51 auf, der vorzugsweise auch von einer Anzahl der Flachleiter 6 bzw. 7 durchquert wird. Beim vorliegenden Ausführungsbeispiel, wo zwei übereinander angeordnete Kunststoffträgerplatten 4 und 5 vorgesehen sind, müssen sich deren Durchbrüche mindestens teilweise überdecken. Die fensterartigen Durchbrüche 42 bzw. 51 dienen dazu, daß beim Umspritzen der soweit fertiggestellten Kabelverbindung, wie sie sich aus den Figuren 2 bis 4 ergibt, der Umspritzungskunststoff durchfließen kann und so bei der fertigen Umspritzung 9 eine möglichst mehrfache feste Verbindung zwischen der Umspritzungsoberschicht 91 und der Umspritzungsunterschicht 92 hergestellt wird.

Als Verstärkung gegen Knickbeanspruchungen zwischen der Kabelverbindung und dem Flachbandkabel 1 ist noch eine Kunststoffklebefolie 8 entsprechender Dicke und Steifigkeit vorgesehen, die über eine gewissen Länge auf die Rückseite des Trägerfolienbands 12 des Flachbandkabels 1 aufgeklebt ist und mit ihrem Endteil in die Kabelverbindung hineinragt. Diese Kunststoffklebefolie 8 ist ebenfalls in dem in die Kabelverbindung hineinragenden Bereich festerförmige Durchbrüche 81 auf, die ein Durchfließen von Umspritzungskunststoff ermöglichen, so daß bei fertiggestellter Kabelverbindung auch diese Klebefolie 8 vollständig und unlösbar in die fertige Kabelverbindung integriert ist.

Als Ausführungsbeispiel dargestellt und beschrieben wurde eine Version der erfindungsgemäßen Kabelverbindung zur Verbindung eines Flachbandkabels mit zwei in zwei Ebenen angeordneten Rundleiteranordnungen, von denen die eine als Rundbandkabel und die andere als Mehrzahl paralleler Rundkabel vorliegt. Es versteht sich, daß die erfindungs gemäße Kabelverbindung ebenso für den Anschluß von Rundleitern in nur einer Ebene an ein Flachbandkabel ausgebildet sein kann, wobei nur einer Kunststoffträgerplatte mit einer Anordnung von Flachleitern vorgesehen ist. Es können aber auch Rundleiteranordnungen in drei oder noch mehr Ebenen mittels einer solchen Kabelverbindung mit einem Flachbandkabel verbunden sein, wobei für jede Rundleiterebene eine Kunststoffträgerplatte und eine Gruppe von in einer Ebene angeordneten Flachleitern Verwendung findet.

Beim dargestellten Ausführungsbeispiel ist das Flachbandkabel mit seinem Ende mit einer Rundleiteranordnung verbunden, wobei alle Flachbandleiter des Flachbandkabels mit einem Rundleiter verbunden sind. Es versteht sich, daß mit der erfindungsgemäßen Kabelverbindung auch Kabelabzweige vom Flachbandkabel zu Rundleiteranordnungen hergestellt werden können, die ebensoviele Pole oder weniger Pole als das Flachbandkabel haben.

Das Herstellverfahren für die Kabelverbindung nach dem hier dargestellten und beschriebenen Ausführungsbeispiel erfolgt folgendermaßen:
a) Die Kunststoffträgerplatten 4 und 5 werden jeweils als Kunststoffspritzgußteil hergestellt.
b) Die Flachleiteranordnungen 6 und 7 werden jeweils als Blechstanzgitter vorgefertigt, wobei die acht bzw. vier Flachleiter an ihren beiden jeweils verlängerten Enden durch Querstege zu einem einstückigen Stanzgitter verbunden sind.
c) Das Flachleiter-Stanzgitter für die Flachleiter 6 wird in die Kunststoffträgerplatte 4 eingelegt und darin mittels eines Heizstempels durch teilweise plastische Verformung des Kunststoffs vernietungsartig fixiert. Sodann wird die Stanzgitterverbindungsbrücke rundbandkabelseitig gebrochen.
d) Das Rundbandkabel 2 wird auf die Kunststoffträgerplatte und die darin fixierten Flachleiter aufgelegt, und die blanken Aderenden des Rundbandkabels werden durch Ultraschallverschweißung mit den Flachleitern 6 verschweißt.
e) Das Stanzgitter für die Flachleiter 7 wird in die zweite Kunststoffträgerplatte 5 eingelegt und dort mittels eines Heißstempels durch plastische Teilverformung des Kunststoffs vernietungsartig in den Kanälen der Kunststoffträgerplatte 5 fixiert. Die Verbindungsbrücke des Stanzgitters wird rundkabelseitig abgebrochen.
f) Die beiden Rundkabel 7 werden auf die Kunststoffträgerplatte 5 und die darin befindlichen Flachleiter 7 aufgelegt und die blanken Aderenden der beiden Rundkabel 3 werden durch Ultraschallverschweißung mit den Flachleitern 7 verschweißt.
g) Die noch vorhandenen Verbindungsbrücken der Stanzgitter beider Gruppen von Flachleitern 6 und 7 werden nun flachbandkabelseitig ebenfalls abgebrochen.
h) Die zweite Kunststoff trägerplatte 5, an welcher die Flachleiter 7 mit den ultraschallverschweißten Rundkabeln 3 fixiert sind, wird nun auf die Kunststoffträgerplatte 4 aufgeklipst, an welcher die Flachleiter 6 mit den daran verschweißten Rundbandkabeladern fixiert sind.
i) Die Kunststoffträgerplatte 4 wird auf das Flachbandkabel aufgesetzt und die Flachleiter 6 und 7 werden mit den Flachbandleitern 12 und 13 des Flachbandkabels durch Ultraschallverschweißung verschweißt.
k) Kunststoffträgerplatte 4 und das Flachbandkabel 1 werden rückseitig zum Schutz vor Knick- und Zugbelastung mit der Kunststoffklebefolie 8 beklebt.
l) Die Anordnung wird in das Umspritzungswerkzeug eingelegt und mit der Kunststoffumspritzung 9 zum fertigen Kabelverbindungsblock umspritzt.

In Bezug auf die Umspritzung 9 ist noch darauf hinzuweisen, daß die Umspritzung 9 auf diejenigen Bereiche der Kabelverbindung beschränkt sein kann, die notwendig sind, um die Gesamtanordnung zu kapseln. Das bedeutet, daß auch Teile bzw. Außenflächenbereiche mindestens einer in der Anordnung verwendeten Kunststoffträgerplatte einen Teil der Kapselung bilden können, z.B. der von den jeweiligen Flachleitungen abgewandte Wandbereich einer Kunststoffträgerplatte. Insoweit brauchen auch keine fensterartigen Durchbrüche vorgesehen zu sein.

Um die Abstützung der insoweit fertiggestellten Anordnung im Umspritzungswerkzeug zu erleichtern, können an der bzw. mindestens einer Kunststoff trägerplatte Abstandhalter zur Abstützung an einer Formwand des Umspritzungswerkzeugs vorgesehen sein, wie sie beim Ausführungsbeispiel in Form zweier Zapfen 43 an der Kunststoffträgerplatte 4 dargestellt sind.

Es liegt auf der Hand, daß die erfindungsgemäße Kabelverbindung durch die Kunststoffträgerplatte (n) mit eingeformten Führungskanälen eine bessere Fixierung der Rundleiterenden zum Verschweißen und der Kabelverbindungsanordnung schon während der einzelnen Montageschritte Stabilität verleiht. Die Verwendung der in die Kanäle der bzw. jeder Kunststoffträgerplatte eingelegten Flachleiter als Stanzgitter erleichtert deren gemeinsame Handhabung bei der Montage, und diese Flachleiter ermöglichen die Problemlosen übergänge von unterschiedlichen Rastern, Querschnitten, Leiterbahnbreiten und Ebenen zwischen dem Flachbandkabel und den Rundleitern.

Wenngleich das Ausführungsbeispiel einen Kabelverbinder zeigt, den einen rechtwinklig abgehenden Rundleiteranschluß an das Flachbandkabel im wesentlichen in der Hauptebene des Flachbandkabels herstellt, versteht es sich doch, daß auch jeder andere Abgangswinkel möglich ist und daß der Rundleiterabgang statt im wesentlichen in der Hauptebene des Flachbandkabels auch unter einem rechten oder anderen Winkel zur Hauptebene des Flachbandkabels erfolgen kann. Die bzw. mindestens eine Kunststoffträgerplatte ist dann in der entsprechenden winkelform ausgebildet und die zugehörigen Flachleiter stellen die entsprechenden Übergänge her.

## Patentansprüche

1. Kabelverbindung zwischen einem mehrpoligen Flachbandkabel und einer mehrpoligen Rundleiteranordnung als Abzweigoder Endverbindung,
- mit mindestens einer Kunststoffträgerplatte (4; 5),
- und mit einer Mehrzahl von aus Blech gestanzten Flachleitern (6; 7) zur Verbindung jeweils eines Rundleiterendes (22; 33) mit einem entsprechenden Flachbandleiter (12, 13) des Flachbandkabels (1),
- wobei die Flachleiter (6; 7) jeweils mit dem zugehörigen Rundleiterende sowie mit dem entsprechenden Flachbandleiter (12, 13) des Flachbandkabels (1) stoffschlüssig verbunden sind,
**dadurch gekennzeichnet, dass**
- in der Kunststoffträgerplatte (4; 5) Führungskanäle eingeformt sind, die jeweils einen der Flachleiter (6; 7) und im rundleiterseitigen Endbereich auch das betreffende Rundleiterende aufnehmen,
- und eine mindestens teilweise Umspritzung (9) die Flachleiter (6; 7) einschließlich deren Verbindungsbereiche mit den Rundleitern (2; 3) und dem Flachbandkabel (1) kapselt.

2. Kabelverbindung nach Anspruch 1, wobei die stoffschlüssige Verbindung zwischen den Flachleitern (6; 7) und den Rundleiterenden bzw. den Flachbandleitern (12, 13) des Flachbandkabels (1) durch Ultraschallschweißen hergestellt sind.

3. Kabelverbindung nach Anspruch 1 oder 2, wobei die mindestens eine Kunststoffträgerplatte (4) mit angeformten Abstandshalteelementen (43) zur Positionierung in einem Umspritzungswerkzeug versehen ist.

4. Kabelverbindung nach einem der Ansprüche 1 bis 3, wobei zwei oder mehr Kunststoffträgerplatten (4, 5) zum Anschluß von zwei oder mehr Rundleiteranordnungen (2, 3) in zwei oder mehr übereinanderliegenden Ebenen vorgesehen sind, wobei jede Kunststoffträgerplatte mit eingeformten Kanälen zur Aufnahme einer Gruppe von Flachleitern (6, 7) und am rundleiterseitigen Ende auch der Rundleiterenden ausgebildet ist.

5. Kabelverbindung nach Anspruch 4, wobei die zwei oder mehr Kunststoffträgerplatten durch an ihnen angeordnete und miteinander zusammenwirkende Rastorgane (41) aufeinander aufklipsbar sind.

6. Kabelverbinder nach Anspruch 4 oder 5, wobei eine obere Kunststoffträgerplatte (5) eine untere Kunststoffträgerplatte nur teilweise im Bereich von derem rundleiterseitigem Abschnitt überdeckt und die untere Kunststoffträgerplatte (4) an ihrer Unterseite mit den Kanälen zur Aufnahme der ihr zugeordneten Flachleiter (6) und der zugehörigen Rundleiterenden versehen ist und an ihrer Oberseite in dem nicht von der oberen Kunststoffträgerplatte überdeckten Bereich mit Führungskanälen zur Weiterführung der von der oberen Kunststoffträgerplatte kommenden Flachleiter (7) versehen ist.

7. Kabelverbindung nach einem der Ansprüche 1 bis 3, wobei die mindestens eine Kunststoffträgerplatte sowohl an ihrer Oberseite wie an ihrer Unterseite mit jeweils einer Gruppe von Kanälen zur Aufnahme jeweils einer Gruppe von Flachleitern und dem rundleiteranschlußseitigen Bereich auch zur Aufnahme der zugehörigen Rundleiterenden ausgebildet ist.

8. Kabelverbindung nach einem der Ansprüche 1 bis 7, wobei die mindestens eine Kunststoffträgerplatte (4) mit mindestens einem fensterartigen Durchbruch (42) versehen ist, der das Durchfließen von Umspritzungsmaterial ermöglicht.

9. Kabelverbindung nach einem der Ansprüche 1 bis 8, wobei mindestens ein über eine gewisse Distanz entlang des Flachbandkabels (1) verlaufendes Verstärkungselement (8) vorgesehen ist, das über die Umspritzung (9) in die fertige Kabelverbindung integriert ist.

10. Kabelverbindung nach Anspruch 9, wobei das Verstärkungselement (8) durch eine am Flachbandkabel haftende Klebefolie gebildet ist.

11. Verfahren zum Herstellen einer Kabelverbindung nach einem der Ansprüche 1 bis 10, mit folgenden Schritten:
a) Herstellen der mindestens einen mit Kanälen geformten Kunststoffträgerplatte (4; 5) als Kunststoffspritzgußteil,
b) Herstellen der mindestens einen Anordnung von Flachleitern (6; 7) in Form eines Blechstanzgitters, bei welchem die Flachleiter über ihre beiderseits verlängerten Enden durch guerverlaufende Blechbrücken miteinander verbunden sind,
c) Einlegen des Stanzgitters in die Kanäle der betreffenden Kunststoffträgerplatte,
d) Abbrechen der rundleiterseitigen Verbindungsblechbrücke von den Flachleitern,
e) Einlegen der Rundleiter in die entsprechenden Kanäle der Kunststoffträgerplatte und stoffschlüssiges Verbinden der Rundleiterenden mit den Flachleitern,
f) Abbrechen der flachbandkabelseitigen Verbindungsblechbrücken zwischen den Flachleitern,
g) formschlüssiges Verbinden der flachbandkabelseitigen Flachleiterenden mit den Flachbandleitern des Flachbandkabels, Einlegen der so hergestellten Anordnung in ein Umspritzungswerkzeug und Herstellen der Kunststoffumspritzung (9).

12. Verfahren nach Anspruch 11, wobei vor dem Schritt g) ggfs. mehrere nach den Schritten c) bis f) hergestellte Einzelanordnungen von Kunststoffträgerplatten mit jeweils einer Gruppe von Flachleitern und damit verbundenen Rundleitern durch Aufeinanderstecken bzw. Aufeinanderklipsen der Kunststoffträgerplatten (4, 5) miteinander zu einer Gesamtanordnung verbunden werden.

13. Verfahren nach Anspruch 11 oder 12, wobei jeweils nach dem Schritt c) die Flachleiter in den Kanälen der Kunststoffträgerplatte mittels eines Heißstempels durch teilweises plastisches Verformen der Kanalränder vernietungsartig fixiert werden.

14. Verfahren nach einem der Ansprüche 11 bis 13, wobei vor dem Einlegen der Anordnung in das Umspritzungswerkzeug das Verstärkungselement (8) am Flachbandkabel (1) fixiert wird.

## Claims

1. Cable connection between a multipole flat ribbon cable and a multipole round conductor arrangement as a branch or end connection,
with at least one plastic support plate (4; 5),
and with a plurality of flat conductors (6; 7) punched from sheet metal for connecting a respective round conductor end (22; 33) to a corresponding flat ribbon conductor (12, 13) of the flat ribbon cable (1),
wherein the flat conductors (6; 7) are each connected with material fit to the associated round conductor end and to the corresponding flat ribbon conductor (12, 13) of the flat ribbon cable (1),
**characterised in that**
guide channels are formed in the plastic support plate (4; 5), which each receive one of the flat conductors (6, 7) and, in the round conductor-side end region, also receive the relevant round conductor end,
and an at least partial encapsulation (9) encapsulates the flat conductors (6; 7) including their connecting regions to the round conductors (2; 3) and the flat ribbon cable (1).

2. Cable connection according to claim 1, wherein the connection with material fit between the flat conductors (6; 7) and the round conductor ends or the flat ribbon conductors (12, 13) of the flat ribbon cable (1) is produced by ultrasonic welding.

3. Cable connection according to claim 1 or 2, wherein the at least one plastic support plate (4) is provided with moulded-on spacer elements (43) for positioning in a encapsulation mould.

4. Cable connection according to any one of claims 1 to 3, wherein two or more plastic support plates (4, 5) for connecting two or more round conductor arrangements (2, 3) are provided in two or more superimposed planes, wherein each plastic support plate is designed with moulded-in channels for receiving a group of flat conductors (6, 7) and also round conductor ends on the round conductor-side end.

5. Cable connection according to claim 4, wherein the two or more plastic support plates can be clipped onto one another by latching members (41) arranged on them and cooperating with one another.

6. Cable connector according to claim 4 or 5, wherein an upper plastic support plate (5) only partially covers a lower plastic support plate in the region of its round conductor-side section and the lower plastic support plate (4) is provided on its lower side with the channels for receiving the flat conductors (6) associated therewith and the associated round conductor ends and is provided on its upper side in the region not covered by the upper plastic support plate with guide channels for further guidance of the flat conductors (7) coming from the upper plastic support plate.

7. Cable connection according to any one of claims 1 to 3, wherein the at least one plastic support plate, at both its upper and its lower side, is provided with a respective group of channels for receiving a respective group of flat conductors and the round conductor connection-side region also for receiving the associated round conductor ends.

8. Cable connection according to any one of claims 1 to 7, wherein the at least one plastic support plate (4) is provided with at least one window-like opening (42) allowing the encapsulation material to flow through.

9. Cable connection according to any one of claims 1 to 8, wherein at least one reinforcement element (8) extending over a certain distance along the flat ribbon cable (1) is provided which is integrated into the completed cable connected via the encapsulation (9).

10. Cable connection according to claim 9, wherein the reinforcement element (8) is formed by an adhesive film adhering to the flat ribbon cable.

11. Method for producing a cable connection according to any one of claims I to 10; with the following steps:
a) producing the at least one plastic support plate (4; 5) formed with channels as an extruded plastic part,
b) producing the at least one arrangement of flat conductors (6, 7) in the form of a grid punched from sheet metal, in which the flat conductors, over their ends which are extended on either side, are connected to one another by transversely extending sheet metal bridges,
c) inserting the punched grid into the channels of the relevant plastic support plate,
d) breaking the round conductor-side sheet metal connecting bridge from the flat conductors,
e) inserting the round conductors into the corresponding channels of the plastic support plates and connecting the round conductor ends to the flat conductors with material fit,
f) breaking off the flat ribbon cable-side sheet metal connecting bridges between the flat conductors,
g) connecting the flat ribbon cable-side flat conductor ends with interlocking fit to the flat ribbon conductors of the flat ribbon cable, inserting the arrangement produced in this way into an encapsulating mould and producing the plastic encapsulation (9).

12. Method according to claim 11, wherein prior to step g) optionally a plurality of individual arrangements of plastic support plates produced according to steps c) to f) are connected to a respective group of flat conductors and round conductors connected thereto by plugging or clipping the plastic support plates (4, 5) on top of one another to form an aggregate arrangement.

13. Method according to claim 11 or 12, wherein after step c) in each case the flat conductors are fixed by a method resembling riveting in the channels of the plastic support plate by means of a hot punch by partial plastic deformation of the channel edges.

14. Method according to any one of claims 11 to 13, wherein prior to inserting the arrangement into the encapsulating mould the reinforcement element (8) is fixed to the flat ribbon cable (1).

## Revendications

1. Raccordement de câbles entre un câble plat multipolaire et un groupe de conducteurs ronds multipolaires, sous forme de raccordement de branchement ou de raccordement terminal,
comportant au moins une plaque de support en plastique (4; 5)
et plusieurs conducteurs plats estampés à partir de tôle (6; 7) pour connecter respectivement une extrémité d'un conducteur rond (22; 33) avec le conducteur plat correspondant (12, 13) du câble plat (1);
les conducteurs plats (6, 7) étant respectivement raccordés par contact à l'extrémité du conducteur rond correspondant ainsi qu'au conducteur plat correspondant (12, 13) du câble plat (1);
**caractérisé en ce que**
la plaque de support en plastique (4, 5) comporte des canaux de guidage qui y sont formés, recevant respectivement un des conducteurs plats (6, 7) ainsi que l'extrémité du conducteur rond correspondant dans la région d'extrémité du côté des conducteurs ronds;
un enrobage par injection (9) assurant au moins partiellement l'encapsulage des conducteurs plats (6, 7) y compris de leurs régions de raccordement aux conducteurs ronds (2; 3) et au câble plat (1).

2. Raccordement de câbles selon la revendication 1, dans lequel le raccordement par contact entre les conducteurs plats (6; 7) et les extrémités des conducteurs ronds ou les conducteurs plats (12, 13) du câble plat (1) est établi par soudage par ultrasons.

3. Raccordement de câbles selon les revendications 1 ou 2, dans lequel la au moins une plaque de support en plastique (4) comporte des éléments d'espacement (43) en vue du positionnement dans un outil d'enrobage par injection.

4. Raccordement de câbles selon l'une des revendications 1 à 3, comportant deux ou plusieurs plaques de support en plastique (4, 5) pour le raccordement de deux ou de plusieurs groupes de conducteurs ronds (2, 3) dans deux ou plusieurs plans superposés, chaque plaque de support en plastique comportant des canaux destinés à recevoir un groupe de conducteurs plats (6, 7) ainsi que les extrémités des conducteurs ronds sur l'extrémité du côté des conducteurs ronds.

5. Raccordement de câbles selon la revendication 4, dans lequel les deux ou plusieurs plaques de support en plastique peuvent être assemblées par clipsage par l'intermédiaire d'organes d'encliquetage à coopération (41) qui y sont agencés.

6. Raccordement de câbles selon les revendications 4 ou 5, dans lequel une plaque de support en plastique supérieure (5) ne chevauche que partiellement une plaque de support en plastique inférieure dans la région de la section du côté des conducteurs ronds, la plaque de support en plastique inférieure (4) comportant au niveau de son côté inférieur les canaux destinés à recevoir les conducteurs plats (6) qui lui sont affectés ainsi que les extrémités correspondantes des conducteurs ronds et comportant au niveau de son côté supérieur, dans la région non chevauchée par la plaque de support en plastique supérieure, des canaux de guidage servant au guidage ultérieur des conducteurs plats (7) provenant de la plaque de support en plastique supérieure.

7. Raccordement de câbles selon l'une des revendications 1 à 3, dans lequel la au moins une plaque de support en plastique comporte au niveau de son côté supérieur et au niveau de son côté inférieur respectivement un groupe de canaux destinés à recevoir respectivement un groupe de conducteurs plats, la région du côté du raccordement des conducteurs ronds servant aussi à recevoir les extrémités correspondantes des conducteurs ronds.

8. Raccordement de câbles selon l'une des revendications 1 à 7, dans lequel la au moins une plaque de support en plastique (4) comporte au moins une ouverture en forme de fenêtre (42), permettant l'écoulement du matériau d'enrobage par injection.

9. Raccordement de câbles selon l'une des revendications 1 à 8, comportant au moins un élément de renforcement (8) s'étendant sur une distance définie le long du câble plat (1), intégré par l'intermédiaire de l'enrobage par injection (9) dans le raccordement de câbles fini.

10. Raccordement de câbles selon la revendication 9, dans lequel l'élément de renforcement (8) est constitué par une feuille collante adhérant sur le câble plat.

11. Procédé de fabrication d'une raccordement de câbles selon l'une des revendications 1 à 10, comportant les étapes ci-dessous:
a) fabrication de la au moins une plaque de support en plastique (4; 5) pourvue de canaux, sous forme d'une pièce moulée par injection de plastique;
b) fabrication du au moins un groupe de conducteurs plats (6, 7) sous forme d'un grillage estampé de tôle, dans lequel les conducteurs plats sont reliés à travers leurs extrémités allongées des deux côtés par des ponts de tôle à extension transversale;
c) insertion du grillage estampé dans les canaux de la plaque de support en plastique correspondante;
d) interruption du pont de liaison en tôle des conducteurs plats du côté des conducteurs ronds;
e) insertion des conducteurs ronds dans les canaux correspondants de la plaque de support en plastique et raccordement par contact des extrémités des conducteurs ronds avec les conducteurs plats,
f) interruption des ponts de liaison en tôle entre les conducteurs plats du côté du câble plat;
g) raccordement par interverrouillage des extrémités des conducteurs plats du côté du câble plat avec les conducteurs plats du câble plat, et insertion de l'agencement ainsi produit dans un outil d'enrobage par injection et production de l'enrobage par injection de plastique (9).

12. Procédé selon la revendication 11, dans lequel, avant l'étape g), facultativement plusieurs groupes individuels de plaques de support en plastique produites selon les étapes c) à f) sont raccordés respectivement à un groupe de conducteurs plats et aux conducteurs ronds qui y sont reliés par superposition ou assemblage par clipsage des plaques de support en plastique (4, 5), pour former un assemblage global.

13. Procédé selon les revendications 11 ou 12, dans lequel, après l'étape c), les conducteurs plats sont respectivement fixés par une fixation de type rivetage dans les canaux de la plaque de support en plastique par l'intermédiaire d'un moule chauffant par déformation plastique partielle des bords des canaux.

14. Procédé selon l'une des revendications 11 à 13, dans lequel l'élément de renforcement (8) est fixé sur le câble plat (1) avant l'insertion de l'assemblage dans l'outil d'enrobage par injection.
